# EUROPEAN PATENT SPECIFICATION

(11) **EP 3 795 788 B1**
(45) Date of publication and mention of the grant of the patent: **12.07.2023**
(21) Application number: 19198908.6
(22) Date of filing: 23.09.2019
(51) Int. Cl.: E05C 19/08, A47C 1/14, E05B 47/00

(54) **APPARATUS FOR LOCKING A RENTAL CHAIR**
VORRICHTUNG ZUM VERSCHLIESSEN EINES MIETSITZES
DISPOSITIF POUR VERROUILLER UNE CHAISE DE LOCATION

(43) Date of publication of application: 24.03.2021
(73) Proprietor: BeachBuddy GmbH, 73773 Aichwald (DE)
(72) Inventor: Bliesener, Jens, 73773 Aichwald (DE)
(74) Representative: Meyer zu Bexten, Elmar

(56) References cited:
- WO-A2-2007/014151
- CN-A- 110 189 481
- DE-A1-102010 027 446
- US-A1- 2012 144 883
- US-A1- 2012 186 308

## Description

### Technical Field

The invention relates to the products and process as per the preamble of the independent claims.

### Background Art

A roofed wicker beach chair (German: "Strandkorb") is a special hooded windbreak seating furniture used at vacation and seaside resorts, constructed from wicker, wood panels, and canvas, usually seating up to two people and having a reclining backrest as discussed, for instance, in PTL1. Typically, such chairs are rented from beach-chair wardens and, while vacant, locked shut by means of a wooden lattice having a hasp that is engaged by a staple of sufficient diameter for passing a padlock shackle therethrough.

NPL1 discloses a padlock-type electronic seal suitable for radio-frequency identification (RFID).

A locking system as per PTL2 can include an RFID lock that can include a shackle and a body that can, for example, be steel, or other materials commonly used to produce locks, such as metal alloys, etc. The shackle can be pressed into the body and locked into place by an electronic piston. When the RFID lock is to be unlocked, an electronic piston can release the shackle allowing the lock to be opened. However, the electronic piston can be controlled by an RFID reader. The electronic piston can be opened when the RFID reader reads an RFID enabled key that is configured to unlock the RFID lock. In other words, specific RFID enabled keys can be configured to open the RFID lock analogously to the way that specific keys can be cut to configure the key to open a specific lock.

PTL3 discloses a theft deterrent hasp assembly for shrouding the shackle of a pad lock device. The disclosed hasp comprises a hingeable arm having a protective shroud at its distal end and a pad lock hoop engagement hole. The engagement hole is positioned at an angle with regard to the length of the hingeable hasp and along a diagonal within the shroud enclosure to allow improved access for pad lock shackle insertion therein. This access allows the shackle to be inserted into a pad lock hoop protruding through the engagement hole of the hasp after placement thereover, while the protective shroud provides plurality of upstanding members that form a three-sided structure for protection against tampering. The shroud members are adapted to cover most of the padlock shackle while in use, preventing cutting tools or saw blades from achieving access thereto while in a locked position.

PTL4 proposes a device with fastening means for fastening at least one support leg for setting up the device for locking in an environment of a wicker beach chair when not in use.

### Summary of invention

The invention as claimed is hereinafter disclosed in such a way that the technical problem with which it deals can be appreciated and the solution can be understood.

### Technical Problem

The beach chair landlord is burdened with the task of managing padlock keys. A frequently occurring problem here is the loss or theft of keys. In such case, the lock must be forced open using a bolt cutter.

Renters must pick up and return a key during the opening hours of the landlord. Once in possession of the key, they must locate and navigate to the chair.

### Solution to Problem

The problem is solved as per the characterizing part of Claim 1.

### Advantageous effect of invention

The need for key management is eliminated. In case of loss or theft of a tag, a replacement tag may easily be written using RFID technology such as near-field communication (NFC).

In a preferred embodiment, the lock may be secured to the beach chair by means of a wire rope to prevent theft and misplacement.

In addition to the RFID antenna of a conventional RFID padlock, a second RFID antenna allows for the padlock to determine whether the chair's lattice is closed.

The optional Bluetooth function of the lock enables the beach chair renter to simply reserve and unlock the beach chair via smartphone directly on site, independent of the opening hours of the landlord. Thus, more flexible billing models are made possible.

In addition, the combination of Bluetooth and a smartphone's positioning capabilities allows any phone user to determine the location of the beach chair. This makes it easier for the tenant to find his basket by allowing him to navigate to the exact position.

### Brief description of drawings

Figure 1 is a partial front view of a chair.
Figure 2 is a detailed front view of a padlock, hasp, and staple.
Figure 3 is a corresponding view of the hasp, extended by an RFID tag, and staple.
Figure 4 is a side view of the padlock, hasp, staple, and tag.
Figure 5 is a partial view of the padlock engaged with a wire cable.

### Description of embodiments

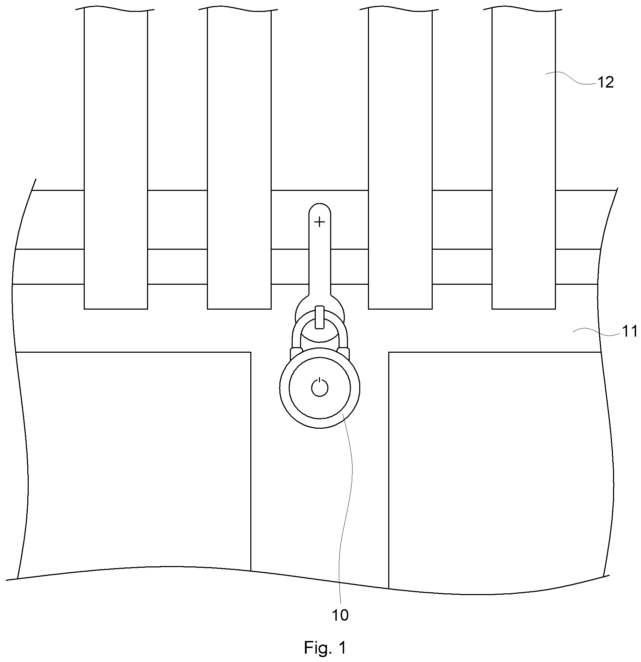

Figure 1 shows a rental roofed wicker beach chair (11) whose lattice (12) is locked shut by means of a padlock (10). Not depicted, a first RFID tag is used as a contactless key for unlocking the padlock (10).

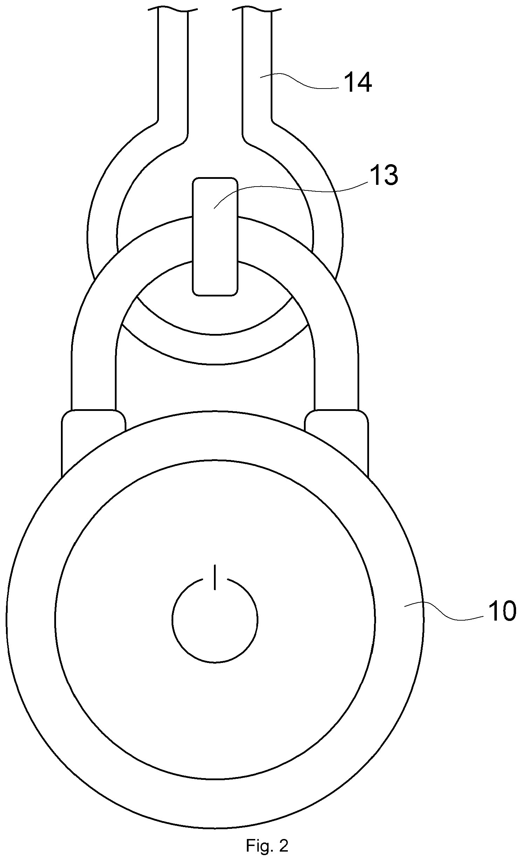

Figure 2 elucidates the apparatus in additional detail. As may be seen in this view, the shackle of the padlock (10) passes through a staple (13) engaged with a hasp (14) of the lattice (12).

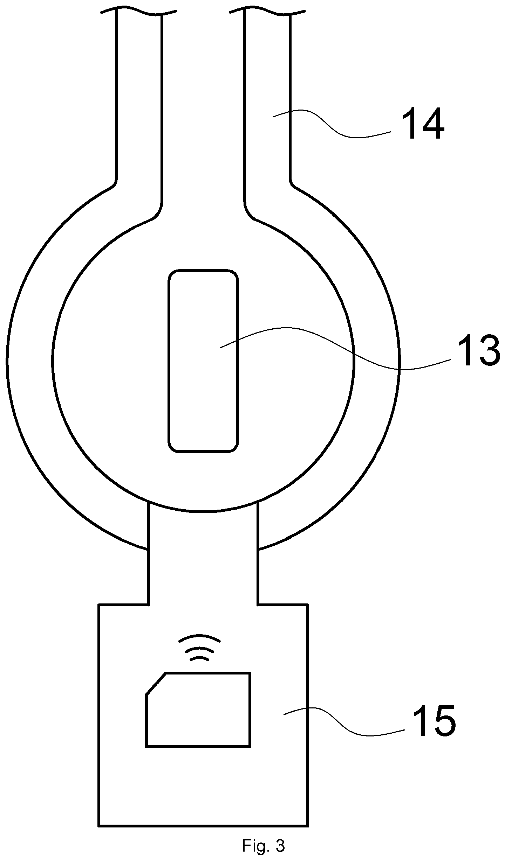

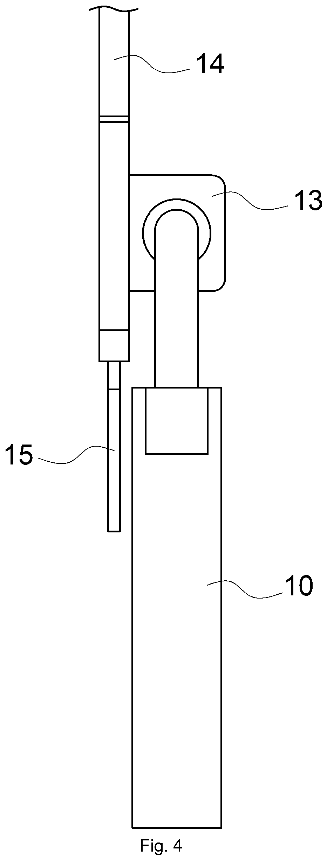

Figure 3 reveals a second RFID tag (15) attached to and extending the hasp (14). By means of a second built-in RFID antenna, the padlock (10) is configured to lock upon identifying this second tag (15). This use case is illustrated in Figure 4.

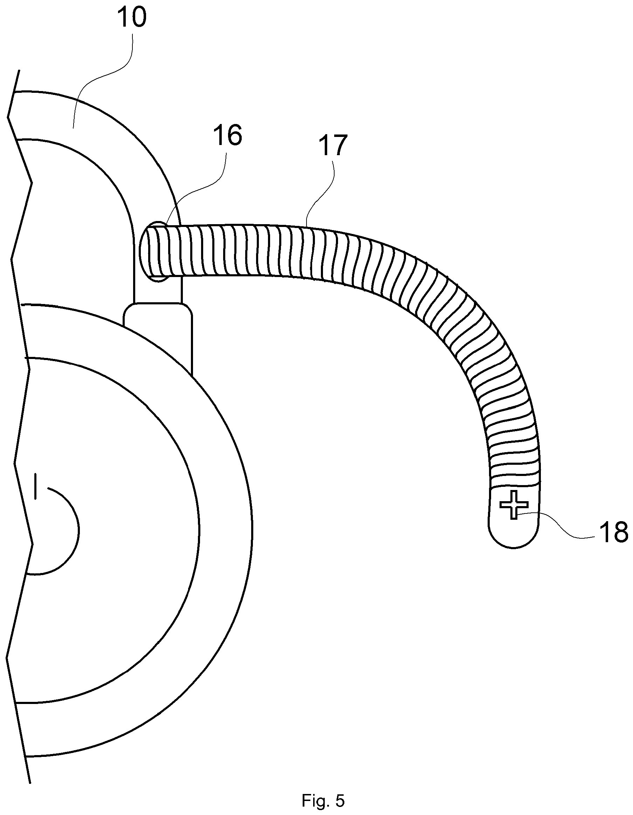

Finally, Figure 5 illustrates a wire rope (17) engaged with a bore (16) in the shackle of the padlock (10) for fixation (18) to the staple (13) of the chair (11).

Not shown in the figures, by means of Bluetooth Low Energy or similar personal area network (PAN), the padlock (10) communicates wirelessly with a mobile device such as a smartphone. To this end, the padlock (10) is equipped with a button or other replaceable battery cell as well as non-volatile memory (NVM) such as flash and a real-time clock.

The RFID unit of the lock is adapted both to read the time of opening from the RFID card and to write the time of closing to the RFID card. This permits the landlord to claim additional payment should the rental period be exceeded. Also, opening of the lock is prevented upon expiration of the rental period.

### Industrial applicability

The invention is applicable, among others, throughout the tourism industry.

### Reference signs list

- 10: Padlock
- 11: Chair
- 12: Lattice
- 13: Staple
- 14: Hasp
- 15: (Second) RFID tag
- 16: Bore
- 17: Rope
- 18: Fixation

### Citation list

The following documents are cited hereinbefore.

### Patent literature

PTL1: DE 198819 (BLUM ALFRED) 03.09.1907
PTL2: WO 2007/014151 A (NEOLOGY INC [US]; MARTINEZ DE VELASCO CORTINA FR [MX] ET AL.) 01.02.2007
PTL3: US 2012144883 A (LONGWELL DANNY [US]) 14.06.2012
PTL4: DE 102010027446 A (KIEFT KARL-HEINZ [DE]) 19.01.2012

### Non-patent literature

NPL1: MCCORMACK, Edward, et al. Evaluating the Use of Electronic Door Seals (E-Seals) on Shipping Containers. International Journal of Applied Logistics (IJAL). 2010, vol.1, no.4, p.13-29.

## Claims

1. Apparatus comprising
a padlock (10) having a shackle for locking a rental chair (11) having a lattice (12), such as a roofed wicker beach chair (11),
wherein the padlock (10) is configured to unlock upon identifying a first radio-frequency identification tag,
**characterized in**
a second radio-frequency identification tag (15) for attachment to a hasp (14) of the lattice (12),
wherein the padlock (10) is further configured to lock upon identifying the second radio-frequency identification tag (15).

2. Apparatus as per Claim 1 wherein
the second tag (15) and padlock (10) are configured, particularly formed, such that the padlock (10) identifies the second tag (15) if the shackle passes through a staple (13) engaging the hasp (14) and the second tag (15) extends the hasp (14).

3. Apparatus as per Claim 1 or Claim 2 wherein
a wire rope (17) engaged with a bore (16) in the padlock (10), preferably the shackle, for fixation (18) to the staple (13).

4. Apparatus as per any of the preceding claims wherein
the padlock (10) is configured for wireless communication with a mobile device such as a smartphone.

5. Apparatus as per Claim 4 wherein
the communication is effected by means of a personal area network such as Bluetooth, preferably Bluetooth Low Energy.

6. Apparatus as per Claim 4 wherein
the communication is effected by means of a point-to-point connection such as near-field communication.

7. Apparatus as per any of the preceding claims wherein
the padlock (10) contains a preferably replaceable battery such as a button cell.

8. Apparatus as per any of the preceding claims wherein
the first tag is writable.

9. Apparatus as per Claim 8 wherein
the padlock (10) contains preferably non-volatile memory such as flash memory.

10. A chair (11), particularly roofed wicker beach chair (11), comprising
a lattice (12) having a hasp (14),
a staple (13) for engaging the hasp (14), and
an apparatus as per any of the preceding claims.

11. Method of operating the apparatus as per Claim 9 comprising
unlocking the padlock (10) upon identifying the first tag and
re-locking the padlock (10) upon identifying the second tag (15).

12. Method as per Claim 11 comprising,
upon unlocking, reading a first timestamp from the first tag and storing it in the memory and,
upon re-locking, writing a second timestamp to the first tag.

13. Method as per Claim 11 or Claim 12 comprising,
prior to re-locking, a user key stored on the first tag is matched with a compare key stored on the second tag (15).

14. Computer program comprising instructions to cause the apparatus of
Claim 9 to execute the steps of the method of any of Claim 11, Claim 12, or Claim 13.

15. Data carrier signal carrying the computer program of Claim 14.

## Patentansprüche

1. Vorrichtung umfassend
ein Vorhängeschloss (10) mit einem Bügel zum Verschließen eines Miet-Stuhls (11) mit einem Gatter (12), wie zum Beispiel eines Strandkorbs (11),
wobei das Vorhängeschloss (10) dazu ausgelegt ist, bei Erkennung eines ersten Radiofrequenz-Identifikationstags zu öffnen,
**gekennzeichnet durch**
ein zweites Radiofrequenz-Identifikationstag (15) zur Befestigung an einem Überwurf (14) des Gatters (12),
wobei das Vorhängeschloss (10) ferner dazu ausgelegt ist, bei Erkennung des zweiten Radiofrequenz-Identifikationstags (15) zu schließen.

2. Vorrichtung gemäß Anspruch 1, wobei
das zweite Tag (15) und Vorhängeschloss (10) so konfiguriert, insbesondere geformt sind, dass das Vorhängeschloss (10) das zweite Tag (15) erkennt, wenn der Bügel durch eine Öse (13) geht, die den Überwurf (14) berührt, und das zweite Tag (15) den Überwurf (14) überragt.

3. Vorrichtung gemäß Anspruch 1 oder Anspruch 2, wobei
ein Drahtseil (17) mit einer Bohrung (16) im Vorhängeschloss (10), vorzugsweise dem Bügel, zur Befestigung (18) an der Öse (13) verbunden ist.

4. Vorrichtung gemäß einem der vorhergehenden Ansprüche, wobei
das Vorhängeschloss (10) für eine drahtlose Kommunikation mit einem mobilen Gerät wie einem Smartphone konfiguriert ist.

5. Vorrichtung gemäß Anspruch 4, wobei
die Kommunikation mittels eines persönlichen Netzwerks wie Bluetooth, vorzugsweise Bluetooth Low Energy, erfolgt.

6. Vorrichtung gemäß Anspruch 4, wobei
die Kommunikation mittels einer Punkt-zu-Punkt-Verbindung wie Nahfeldkommunikation erfolgt.

7. Vorrichtung gemäß einem der vorhergehenden Ansprüche, wobei
das Vorhängeschloss (10) eine vorzugsweise austauschbare Batterie wie eine Knopfzelle enthält.

8. Vorrichtung gemäß einem der vorhergehenden Ansprüche, wobei
das erste Tag beschreibbar ist.

9. Vorrichtung gemäß Anspruch 8, wobei
das Vorhängeschloss (10) einen vorzugsweise nichtflüchtigen Speicher wie einen Flash-Speicher enthält.

10. Ein Stuhl (11), insbesondere ein verdeckter Strandkorb (11), umfassend ein Gatter (12) mit einem Überwurf (14),
eine Öse (13) zur Einrastung des Überwurfs (14) und
eine Vorrichtung gemäß einem der vorhergehenden Ansprüche.

11. Verfahren zum Bedienen der Vorrichtung gemäß Anspruch 9, bestehend aus dem Entsperren des Vorhängeschlosses (10) nach Identifizierung des ersten Tags und
dem erneuten Versperren des Vorhängeschlosses (10) nach Identifizierung des zweiten Tags (15).

12. Methode gemäß Anspruch 11 bestehend aus,
beim Entsperren, Lesen eines ersten Zeitstempels vom ersten Tag und Speichern dieses in dem Speicher und,
beim erneuten Versperren, Schreiben eines zweiten Zeitstempels auf den ersten Tag.

13. Methode gemäß Anspruch 11 oder Anspruch 12, wobei
vor dem erneuten Versperren, ein Benutzerschlüssel, der auf dem ersten Tag gespeichert ist, mit einem Vergleichsschlüssel abgeglichen wird, der auf dem zweiten Tag (15) gespeichert ist.

14. Computerprogramm, das Anweisungen enthält, die die Vorrichtung von Anspruch 9 dazu veranlassen, die Schritte der Methode von Anspruch 11, Anspruch 12 oder Anspruch 13 auszuführen.

15. Datenträgersignal, das das Computerprogramm von Anspruch 14 trägt.

## Revendications

1. Appareil comprenant un cadenas (10) ayant un arceau pour verrouiller une chaise de location (11) ayant un treillis (12), tel qu'un fauteuil de plage en osier couvert (11), le cadenas (10) étant configuré pour se déverrouiller lors de l'identification d'une première étiquette d'identification par radiofréquence, **caractérisé par** une seconde étiquette d'identification par radiofréquence (15) destinée à être fixée à une agrafe (14) du treillis (12), le cadenas (10) étant en outre configuré pour se verrouiller lors de l'identification de la seconde étiquette d'identification par radiofréquence (15).

2. Appareil selon la revendication 1 dans lequel la seconde étiquette (15) et le cadenas (10) sont configurés, particulièrement formés, de sorte que le cadenas (10) identifie la seconde étiquette (15) si l'arceau passe par une agrafe (13) engageant l'agrafe (14) et la seconde étiquette (15) étend l'agrafe (14).

3. Appareil selon la revendication 1 ou la revendication 2 dans lequel un câble en fil de fer (17) engagé avec un trou (16) dans le cadenas (10), de préférence l'arceau, pour fixation (18) à l'agrafe (13).

4. Appareil selon l'une quelconque des revendications précédentes dans lequel le cadenas (10) est configuré pour une communication sans fil avec un appareil mobile tel qu'un smartphone.

5. Appareil selon la revendication 4 dans lequel la communication est effectuée au moyen d'un réseau de zone personnelle tel que Bluetooth, de préférence Bluetooth Low Energy.

6. Appareil selon la revendication 4 dans lequel la communication est effectuée au moyen d'une connexion point à point telle que la communication en champ proche.

7. Appareil selon l'une quelconque des revendications précédentes dans lequel le cadenas (10) contient une batterie de préférence remplaçable telle qu'une pile bouton.

8. Appareil selon l'une quelconque des revendications précédentes dans lequel la première étiquette est inscriptible.

9. Appareil selon la revendication 8 dans lequel le cadenas (10) contient de préférence une mémoire non volatile telle qu'une mémoire flash.

10. Un fauteuil (11), en particulier un fauteuil de plage en osier couvert (11), comprenant un treillis (12) ayant une agrafe (14), une agrafe (13) pour engager l'agrafe (14), et un appareil selon l'une quelconque des revendications précédentes.

11. Méthode de fonctionnement de l'appareil selon la revendication 9 comprenant le déverrouillage du cadenas (10) lors de l'identification de la première étiquette et le reverrouillage du cadenas (10) lors de l'identification de la seconde étiquette (15).

12. Méthode selon la revendication 11 comprenant, lors du déverrouillage, la lecture d'un premier horodatage à partir de la première étiquette et son stockage dans la mémoire et, lors du reverrouillage, l'écriture d'un second horodatage sur la première étiquette.

13. Méthode selon la revendication 11 ou la revendication 12 comprenant, avant le reverrouillage, une clé utilisateur stockée sur la première étiquette est comparée à une clé de comparaison stockée sur la seconde étiquette (15).

14. Programme informatique comprenant des instructions pour amener l'appareil de la revendication 9 à exécuter les étapes de la méthode de la revendication 11, de la revendication 12 ou de la revendication 13.

15. Signal de support de données transportant le programme informatique de la revendication 14.
